# EUROPEAN PATENT SPECIFICATION

(11) **EP 2 314 187 B1**
(45) Date of publication and mention of the grant of the patent: **06.06.2012**
(21) Application number: 10188541.6
(22) Date of filing: 22.10.2010
(51) Int. Cl.: A47J 37/07

(54) **Eco-grill**
Ökogrill
Éco-gril

(30) Priority: 22.10.2009 LV 090179
(43) Date of publication of application: 27.04.2011
(73) Proprietor: Petersons, Gints, Riga 1024 (LV)
(72) Inventor: Petersons, Gints, Riga 1024 (LV)
(74) Representative: Fortuna, Aleksandra

(56) References cited:
- EP-A2- 0 069 024
- DE-U1- 20 001 115
- FR-A1- 2 808 665
- GB-A- 2 442 702

## Description

The invention relates to the ecologically pure food warming over and making devices and methods, in particular - food thermal treatment device, which can be used for warming over all kinds of food products, as well as for making of raw meat, fish and different root-crops dishes.

### Prior art

There are known many different grill constructions, which differ in mode of heating (with gas, electricity, charcoal or grill-firewood), grill body and heaters' construction, including bodies with form of whole spectrum shaped metal box with holes for regulation of air flow and cuts in the walls of the body for fixing of shashlik spits or grill product's grill-shaped base-plate. Among them there is known a grill for the making of shashlik (patent LV 13778), called mangal (barbecue), which contains base, two end walls, which are joined with the base by hinges, two lateral walls and two supporting beams, each of them made in a shape of a clip, endings of which interact with the base. Endings of supporting beams are joined with the above mentioned hinges, moreover, each mentioned end wall is tooled up with two supports, which are placed next to hinges with possibility, interacting with the corresponding leg, during the process of assembling turn them by not less than 90 °, namely, mangal is a box-shape grill, which is easy to assemble and dismantle.

Grill in a shape of metal box with holes and cuts for placing of spits in mangal is described also in utility model applications No. RU 54500 and RU 59384 (international patent classification /IPC/ - A47J37/07), which manufacturing is a difficult process in a sense of use of production materials and labour-intensity. These grills are usable after supply of additional fuel and firing material and they have large heat losses.

FR-A- 2 808 665 discloses a grill comprising a wooden block.

**The aim of the invention** is to streamline the process of food preparation, decrease losses of thermal energy during the realization process, as well as to avoid pollution of the environment by using the proposed grill set, because, in comparison with all known grills which are made of metal, it is made of round piece of hardwood, in a way of turning and milling making both its' outer body and its' inner part with cuts which perform the function of air supply and/or firing.

The offered ecogrill is intended for single use, because during the grilling process it slowly burns down, and after the usage of it no substances remain which could be harmful for human health or nature.

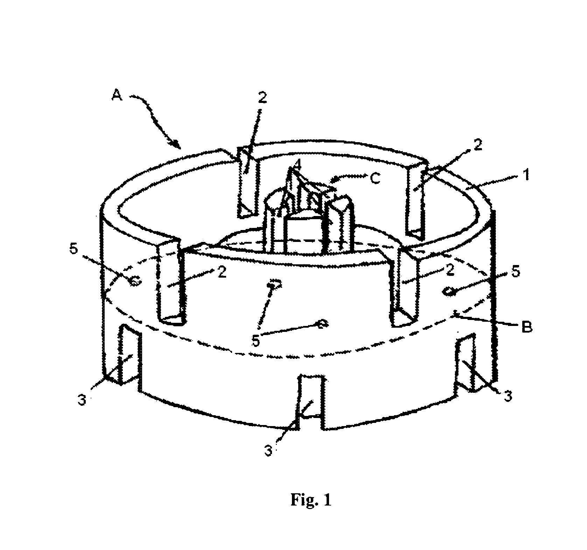

**The essence of the invention,** which is disclosed in patent claims, is the following:
the proposed grill (fig.1), which is intended for the thermal treatment of food products, especially meat, sausages, fish and root-crops, is characterized in that:
   - all its parts are made of hardwood block, preferably - alder block with bark;
   - body of the grill is made of three parts, which consists of:
      - a cylindrical outer lateral wall 1,
      - a flat cylindrical form floor (bottom) B, which in Fig.1 is shown relatively only as one dashed line and
      - a cylindrical central part C, which serves for the ignition of the fuel material (charcoal, grill-firewood, briquettes), hereto:
   - the above mentioned floor B is at the fixed height from the lower surface of the outer lateral wall 1 of the body and is made as a one piece formation at least with the mentioned central part C, preferably - as a one piece formation both with the mentioned central part C and the outer lateral wall 1;
   - four radial cuts (upper windows) 2 are made on the upper part of the mentioned outer lateral wall 1 of the body, which [the cuts] divide the outer lateral wall 1 of the grill into four equivalent cylindrical sectors of 90 degrees;
   - several radial cuts (lower windows) 3 are made on the lower part of the mentioned outer lateral wall 1 of the body, having height not bigger then the space between the mentioned floor B and the lower base of the lateral wall of the body, which are moved aside in connection with upper windows 2 by not less than approximately 30 degrees, preferably - approximately by 45 degrees and serve for air supply under the floor B of the grill;
   - the mentioned grill's cylindrical central part C, which is afar from the outer lateral wall 1 of the grill body as a cylindrical one piece formation at least together with the grill's floor B, preferably - together with the floor of the grill B and the outer lateral wall 1 of the body;
   - in the lateral walls of the mentioned cylindrical central part C of the grill are made four cuts 4, analogous to the upper windows 2 in the outer lateral wall 1 of the grill body, but not necessary of equal height;
   - the empty space between the outer lateral wall 1 of the grill body and the mentioned central part C is dimensioned in a way, which allows to put in it fuel material (charcoal, grill-firewood, briquettes) and
   - the empty space inside of the central part C of the grill is dimensioned in a way, which allows to put in it sufficient amount of firing material (kindling, birch-bark, etc.) for firing of the fuel material, moreover
   - dimensions in millimeters of the mentioned constructive elements, preferably, are as follows: the outer diameter of the cylindrical body of the grill is one selected from the following list: 120 to 160; 160 to 200; 200 to 240; 240 to 280; the diameter of the central part C of the body - 40 to 60; height of the outer lateral wall 1 of the body - 115 to 120; height of lower windows 3 - 35 to 40; height of upper windows 2 - 65 to 70; depth of the outer lateral wall 1 of the body - 15 to 25; width of upper windows 2 - 6 to 15; depth of the wall of the central part C of the body - 10 to 15; diameter of holes 5 in the body's floor B for supply of the lower air - about 10; amount of holes 5 in the floor - 4 to 6.

One embodiment is the following: the lower part of the outer lateral wall 1 of the grill body has been turned in such way that there is made a cylindrical ringlike protrusion in the wall inside along its entire perimeter, besides the cylindrical wall B by the outer measures corresponds with the inner measures of the grill's cylindrical outer wall, so that, when the floor B together with the grill's central part C is put in a cylindrical body from above, it would lean against the mentioned protrusion of the cylindrical body, making a stable two piece construction of the ecogrill. This kind of construction is easy to make and use, because the firing of the grill is simpler, because the grill's central part C, loaded with firing material, can be fired outside the grill and then, already fired, put inside the grill body A, where the combustion chamber later is being gradually filled with fuel material (charcoal, grill-firewood, briquettes). If in this case one window 4 of the grill's central part C in its lower part is supplementary equipped with a widening, which is connected with the inner cavity approximately at the level of the lower part of the window 4, the fuel material can be lightly fired not only with a match, but also with a lighter or candle, especially if the fuel in the lower part of the mentioned cylindrical cavity at first is slightly sprinkled with a fuel mixture for grills.

The proposed ecogrill, which is schematically shown in the Fig.1, can be dimensioned in several ways, which differ by outer and inner diameter of the body, be more precise, by the depth of the outer wall, as well as by measures of the inner turned and milled part. The most important measure is the depth of the outer walls. The line of inner measures has an important meaning only during the process of making of grill's component parts, and they can either ease or make more complicated and labour-consuming the manufacturing of the product.

The cavity between the outer wall 1 of the grill body A, bottom B and central core part C, which are all made by turning, is destined for filling in fuel material (charcoal, grill-firewood, briquettes etc.), but the cavity in the central core part C - for putting in burning material (resinous splinters, birch-barks, chopped slivers, sprinkled with fuel mixture). Cuts 2 and 3 in the grill's lateral wall 1 and cuts 4 in the grill's central part C, as well as holes 5 in the grill's floor B, which in the Fig.1 is shown as a dashed line, are intended for acceleration of burning process and attainment of the necessary temperature. The even upper edge of the lateral wall 1 of the grill body ensures possibility to place on it grill's grating and upon it - the prepared to be product, besides, it is possible to prop spits with the grilling product upon it. The outer wall of the grill, which has good qualities of heat insulation, does not allow the heat to flow away unnecessarily through the grill's lateral walls as it happens in the case of metallic grill body.

The proposed ecogrill can be used as a device for heating and preparation of consumer foodstuffs, by placing it on a fireproof surface out of doors. The device attains maximum grilling temperature already in 15 minutes, together with the fuel material burning also the central part C. All utilization time of the grill is approximately until two hours and it depends on the diameter of the device and depth of the outer wall 1 and bottom B.

The ecogrill can be made in a specially equipped woodwork factory. There is no need for special nonstandard devices for making of it.

## Claims

1. Ecogrill for the thermal treatment of food products, especially meat, sausages, fish and root-crops, **characterized in that**:
- all its parts are made of hardwood block, preferably alder block with bark;
- the body of the grill is made of three parts, which consist of:
i) a cylindrical outer lateral wall (1),
ii) a flat cylindrical form floor (B) and
iii) a cylindrical central part (C), which serves for the ignition of the fuel material e.g. charcoal, grill-firewood, briquettes, whereby:
- the floor (B) is at a fixed height from the lower surface of the outer lateral wall (1) of the body and is made as a one piece formation at least with the central part (C), preferably as a one piece formation both with the central part (C) and the outer lateral wall (1);
- on the upper part of the outer lateral wall (1) of the body, four radial cuts, i.e. upper windows (2), are made, which divide the outer lateral wall of the grill into four equivalent cylindrical sectors of 90°;
- on the lower part of the outer lateral wall (1) of the body, several radial cuts, i.e. lower windows (3), are made, with a height not bigger then the space between the floor (B) and the lower base of the lateral wall (1) of the body, which are moved aside in connection with the upper windows (2) by not less than approximately 30 °, preferably approximately by 45°, and serve for air supply under the floor (B) of the grill;
- the grill's cylindrical central part (C), which is afar from the outer lateral wall (1) of the grill body, is a cylindrical one piece formation at least together with the floor of the grill (B), preferably together with the floor of the grill (B) and the outer lateral wall (1) of the body;
- in the lateral walls (1) of the cylindrical central part (C) of the grill are made four cuts (4) analogous to the upper windows (2) in the outer lateral wall (1) of the grill body, but not necessary of equal height;
- the empty space between the outer lateral wall (1) of the grill body and the central part (C) is dimensioned in a way which allows to put in it fuel material, e.g. charcoal, grill-firewood, and
- the empty space inside of the central part (C) of the grill is dimensioned in a way which allows to put in it sufficient amount of firing material for firing of the fuel material.

2. The ecogrill according to claim 1, **characterized in that** dimensions in millimeters are the following: the outer diameter of the cylindrical body of the grill is selected from the following list: 120 to 160; 160 to 200; 200 to 240; 240 to 280; the diameter of the central part (C) of the body: 40 to 60; the height of the outer lateral wall (1) of the body: 115 to 120; the height of the lower windows (3): 35 to 40; the height of the upper windows (2): 65 to 70; the depth of the outer lateral wall (1) of the body: 15 to 25; the width of the upper windows (2): 6 to 15; the depth of the wall of the central part (C) of the body: 10 to 15; the diameter of the holes (5) in the body's floor (B) for supply of the lower air: about 10; the amount of holes (5) in the floor (B): 4 to 6.

3. The ecogrill according to claim 1 or 2, **characterized in that** the lower part of the outer lateral wall (1) of the grill body has been turned in such way that in the wall (1) there is made a cylindrical ringlike protrusion inside along its entire perimeter, whereby the cylindrical floor (B) by the outer measures corresponds with the inner measures of the grill's cylindrical outer wall (1), so that, when the floor (B) together with the grill's central part (C) is put in the cylindrical outer wall (1) from above, it would lean against said protrusion of the cylindrical outer wall (1).

## Patentansprüche

1. Der Ecogrill für die Wärmebehandlung von Nahrungsmitteln, insbesondere Fleisch, Würstchen, Fisch und Wurzelgemüse, ist **dadurch gekennzeichnet, dass**
- alle seine Teile aus einem Massivholzblock, vorzugsweise aus Erle bestehen; der dunkle Grillkörper ist aus drei Teilen gefertigt und besteht aus:
i) einer zylindrischen äußeren Seitenwand (1),
ii) einem flachen zylindrischen Boden (B) und
iii) einem zylindrischen Mittelteil (C), das zum Anzünden des Brennmaterials, z. B. Holzkohle, Grillholz oder Brikett besteht, wobei
- der Boden (B) sich in einer festen Höhe oberhalb der Unterseite der äußeren Seitenwand (1) des Körpers befindet und aus einem Stück zumindest mit dem Mittelteil (C), vorzugsweise jedoch aus einem Stück mit dem Mittelteil (C) und der äußeren Seitenwand (1) gefertigt wird;
- sich am oberen Teil der äußeren Seitenwand (1) des Körpers vier radiale Einschnitte befinden, d. h. es handelt sich hierbei um die oberen Ausschnitte, die die äußere Seitenwand des Grills in vier gleich große zylindrische Abschnitte von 90° teilen;
- sich am unteren Teil der äußeren Seitenwand (1) des Körpers mehrere radiale Einschnitte befinden, d. h. es handelt sich hierbei um die unteren Ausschnitte (3) mit einer Höhe, die nicht größer ist als der Abstand zwischen dem Boden (B) und der unteren Basis der Seitenwand (1) des Körpers, die zusammen mit den oberen Ausschnitten um mindestens ca. 30°, vorzugsweise um ca. 45° seitlich bewegt werden können und dazu dienen, den Boden (B) des Grills mit Luft zu versorgen.
- das zylindrische Mittelteil (C) des Grills, das sich in einer gewissen Entfernung von der äußeren Seitenwand (1) des Grillkörpers befindet, zumindest mit dem Boden des Grills (B), vorzugsweise jedoch mit dem Boden des Grills (B) und der äußeren Seitenwand (1) des Körpers ein zylindrisches Teil bildet;
- sich an den Seitenwänden (1) des zylindrischen Mittelteils (C) des Grills vier gleich große Einschnitte zum oberen Ausschnitt in der äußeren Seitenwand (1) des Grillkörpers befinden, die nicht unbedingt die gleiche Höhe haben;
- der leere Raum zwischen der äußeren Seitenwand (1) des Grillkörpers und dem Mittelteil (C) hat eine Abmessung, die es ermöglicht, Brennmaterial, z. B. Holzkohle, Grillholz darin unterzubringen und
- der leere Raum innerhalb des Mittelteils (C) des Grills hat eine Abmessung, die es ermöglicht, darin eine ausreichende Menge von Brenngut zum Anzünden des Brennstoffs unterzubringen.

2. Der Ecogrill gemäß Anspruch 1 ist **dadurch gekennzeichnet, dass** er folgende Abmessungen hat, die in Millimeter angegeben sind: Der Außendurchmesser des zylindrischen Körpers des Grills wurde folgender Liste entnommen: 120 bis 160; 160 bis 200; 200 bis 240; 240 bis 280; der Durchmesser des Mittelteils (C) des Körpers ist: 40 bis 60; Höhe der äußeren Seitenwand (1) des Körpers: 115 bis 120; Höhe des unteren Ausschnitts (3): 35 bis 40; Höhe der oberen Ausschnitte (2): 65 bis 70; Tiefe der äußeren Seitenwand (1) des Körpers: 15 bis 25, Breite der oberen Ausschnitte (2): 6 bis 15; Tiefe der Wand des Mittelteils (C) des Körpers: 10 bis 15; Durchmesser der Löcher (5) im Boden (B) des Körpers für die Zufuhr der unteren Luft: ungefähr 10; Anzahl der Löcher (5) im Boden (B): 4 bis 6.

3. Der Ecogrill gemäß Anspruch 1 oder 2 ist **dadurch gekennzeichnet, dass** der untere Teil der äußeren Seitenwand (1) des Grillkörpers so gedreht wurde, dass innen an der Wand (1) ein zylindrischer ringförmiger Vorsprung entlang des gesamten Umfangs verläuft, wobei der zylindrische Boden durch die äußeren Maße mit den inneren Maßen der zylindrischen Außenwand (1) des Grills übereinstimmt, so dass, wenn der Boden mit den Mittelteilen des Grills von oben in die zylindrische Außenwand eingesetzt wird, der Boden eng am genannten Vorsprung der zylindrischen Außenwand (1) anliegt.

## Revendications

1. Gril écologique pour le traitement thermique de produits alimentaires, en particulier de viandes, de saucisses, de poissions et de racines, **caractérisé en ce que** :
- toutes ses parties sont en bois feuillu, de préférence de l'aulne avec écorce ;
- le corps du gril est constitué de trois parties, composées :
i) d'une paroi latérale extérieure cylindrique (1),
ii) d'un fond plat de forme cylindrique (B) et
iii) d'une partie centrale cylindrique (C), qui sert à l'allumage du matériau combustible, par exemple du charbon, du bois de gril, de l'aggloméré, grâce à quoi :
- le fond (B) est situé à une hauteur fixe par rapport à la surface inférieure de la paroi latérale extérieure (1) du corps et constitue une formation d'une seule pièce au moins avec la partie centrale (C), de préférence une formation d'une seule pièce avec la partie centrale (C) et la paroi latérale extérieure (1) ;
- sur la partie supérieure de la paroi latérale extérieure (1) du corps, on prévoit quatre rainures radiales, c'est-à-dire des fenêtres supérieures (2), qui divisent la paroi latérale extérieure du gril en quatre secteurs cylindriques équivalents de 90° ;
- sur la partie inférieure de la paroi latérale extérieure (1) du corps, on prévoit plusieurs rainures radiales, c'est-à-dire des fenêtres inférieures (3), d'une hauteur inférieure ou égale à l'espace entre le fond (B) et la base inférieure de la paroi latérale (1) du corps, qui sont décalées par rapport aux fenêtres supérieures (2) d'au moins environ 30°, de préférence environ 45°, et qui servent à délivrer de l'air sous le fond (B) du gril ;
- la partie centrale cylindrique du gril (C), qui est distante de la paroi latérale extérieure (1) du corps du gril, est une formation cylindrique d'une seule pièce au moins associée au fond du gril (B), de préférence associée au fond du gril (B) et à la paroi latérale extérieure (1) du corps ;
- dans les parois latérales (1) de la partie centrale cylindrique (C) du gril, on prévoit quatre rainures (4), identiques aux fenêtres supérieures (2) dans la paroi latérale extérieure (1) du corps du gril, mais pas nécessairement de taille égale ;
- l'espace vide entre la paroi latérale extérieure (1) du corps du gril et la partie centrale (C) est dimensionné de manière à pouvoir y placer du matériau combustible, par exemple du charbon, du bois de gril, et
- l'espace vide à l'intérieur de la partie centrale (C) du gril est dimensionné de manière à pouvoir y placer une quantité suffisante de matériau d'allumage pour allumer le matériau combustible.

2. Gril écologique selon la revendication 1, **caractérisé en ce que** les dimensions en millimètres sont les suivantes : le diamètre extérieur du corps cylindrique du gril est choisi dans la liste suivante : 120 à 160 ; 160 à 200 ; 200 à 240 ; 240 à 280 ; le diamètre de la partie centrale (C) du corps : 40 à 60 ; la hauteur de la paroi latérale extérieure (1) du corps : 115 à 120 ; la hauteur des fenêtres inférieures (3) : 35 à 40 ; la hauteur des fenêtres supérieures (2) : 65 à 70 ; la profondeur de la paroi latérale extérieure (1) du corps : 15 à 25 ; la largeur des fenêtres supérieures (2) : 6 à 15 ; la profondeur de la paroi de la partie centrale (C) du corps : 10 à 15 ; le diamètre des orifices (5) dans le fond du corps (B) pour délivrer de l'air par dessous : environ 10 ; la quantité d'orifices (5) dans le fond (B) : 4 à 6.

3. Gril écologique selon la revendication 1 ou 2, **caractérisé en ce que** la partie inférieure de la paroi latérale extérieure (1) du corps du gril a été tournée de telle sorte que l'on prévoit dans la paroi (1) une saillie cylindrique en forme d'anneau le long de l'ensemble de son périmètre, le fond cylindrique (B) par les mesures extérieures correspondant aux mesures intérieures de la paroi extérieure cylindrique du gril (1), de telle sorte, lorsque le fond (B) associé à la partie centrale du gril (C) est placé dans la paroi extérieure cylindrique (1), à partir du dessus, qu'il s'appuie contre ladite saillie de la paroi extérieure cylindrique (1).
